(19) **Europäisches Patentamt**

**European Patent Office**

**Office européen des brevets**

(11) **EP 0 833 732 B1**

(12) **EUROPÄISCHE PATENTSCHRIFT**

(45) Veröffentlichungstag und Bekanntmachung des Hinweises auf die Patenterteilung:
**12.01.2000 Patentblatt 2000/02**

(51) Int. Cl.$^7$: **B29C 37/00**

(21) Anmeldenummer: **96919574.2**

(86) Internationale Anmeldenummer:
**PCT/DE96/00903**

(22) Anmeldetag: **23.05.1996**

(87) Internationale Veröffentlichungsnummer:
**WO 96/37356 (28.11.1996 Gazette 1996/52)**

(54) **HERSTELLUNG VON LÖSBAR VERBUNDENEN HÜLSENSTÜCKEN**

PRODUCTION OF RELEASABLE SLEEVE SECTIONS

PRODUCTION DE SECTIONS DE MANCHON ASSEMBLEES AMOVIBLES

(84) Benannte Vertragsstaaten:
**DE ES FR GB IT**

(30) Priorität: **24.05.1995 EP 95108034**

(43) Veröffentlichungstag der Anmeldung:
**08.04.1998 Patentblatt 1998/15**

(73) Patentinhaber:
**Merz & Krell GmbH & Co.**
**64401 Gross-Bieberau (DE)**

(72) Erfinder:
• **LANG, Werner**
  **D-69469 Weinheim (DE)**
• **VIAL, Siegbert**
  **D-64380 Rossdorf (DE)**

• **GANTZERT, Erich**
  **D-64401 Gross-Bieberau (DE)**

(74) Vertreter:
**Leonhard, Frank Reimund, Dipl.-Ing.**
**Leonhard - Olgemöller - Fricke**
**Patentanwälte**
**Postfach 10 09 57**
**80083 München (DE)**

(56) Entgegenhaltungen:
**EP-A- 0 031 150       EP-A- 0 054 681**
**EP-A- 0 672 511       FR-A- 2 340 183**
**GB-A- 2 225 550       US-A- 3 424 831**
**US-A- 4 092 073       US-A- 5 059 077**
**US-A- 5 114 655**

## Beschreibung

Das technische Gebiet der Erfindung ist die vereinfachte Herstellung verbindbarer hülsenförmiger Bauteile, die im Spritzgießverfahren hergestellt werden und leicht lösbar (schraubend) miteinander verbunden und gelöst werden können.

Hülsenförmige Kunststoff-Bauteile werden bisher entweder über Schraubverbindungen oder über Rastverbindungen gefügt.

(a) **Schraubverbindungen** haben den Vorteil der einfachen Lösbarkeit. Ihre Anwendung ist jedem Verbraucher vertraut. Der wesentliche Nachteil dieser Verbindung liegt in der relativ teueren Herstellung. Bei der Herstellung von Teilen mit Außen- oder Innengewinden im Spritzgießverfahren sind Werkzeuge erforderlich, die zusätzlich zu der rein translatorischen Öffnungsbewegung der Spritzgießmaschine weitere translatorische oder rotatorische Bewegungen ausführen, um die Gewindekontur des Spritzgußteiles aus dem Werkzeug **entformen zu können**. Diese Werkzeuge sind durch die größere Anzahl von Bauteilen und durch die zusätzliche Entformungsbewegung teuer und störungsanfällig. Außerdem ist durch die zusätzliche Entformungsbewegung eine längere Zykluszeit im Produktionsprozeß erforderlich, die die Produktionskosten erhöht.

(b) **Rastverbindungen** haben umlaufende oder aus Segmenten bestehende Rillen oder Rippen ("Rastkonturen") auf rotationssymmetrischen oder polygonförmigen Hülsen. Diese Rastverbindungen lassen sich in der Regel kostengünstiger herstellen als Schraubverbindungen, da für die Entformung der Rastkonturen keine zusätzliche rotatorische Entformungsbewegung erforderlich ist. Teilweise werden aber zur Herstellung der Teile Werkzeuge eingesetzt, die zusätzlich zur translatorischen Öffnungsbewegung der Spritzgießmaschine weitere translatorische Bewegungen ausführen, um die Rastkonturen zu entformen, und dadurch teuer sind. Rastverbindungen haben den prinzipiellen Nachteil, daß die Kraft, die der Verbindung der zu fügenden Teile dient, beim Lösen der Verbindung überwunden werden muß. Rastverbindungen verwirklichen **immer einen Kompromiß** zwischen möglichst guter Haltbarkeit und möglichst geringer Lösekraft: **Keine** der beiden Anforderungen kann optimiert werden **ohne die andere zu verschlechtern**. Um reproduzierbare Halte- und Lösekräfte sicherzustellen, sind in der Produktion engere Toleranzen als bei Schraubverbindungen einzuhalten, wodurch die Herstellungskosten erhöht werden. Beim Lösen der Rastverbindung werden die Rastgeometrien teilweise verformt, so daß die Haltekräfte nach mehrmaligem Entrasten und Einrasten - also während des Gebrauchs - abnehmen. Zusätzlich dazu ist die Funktionsweise der Rastverbindungen für viele Verbraucher nicht verständlich und wird daher von diesen nicht als lösbare Verbindung erkannt, wodurch die Mehrfachnutzung von nachfüllbaren Geräten, insbesondere Kugelschreiber oder Tintenschreiber, ungenutzt bleibt.

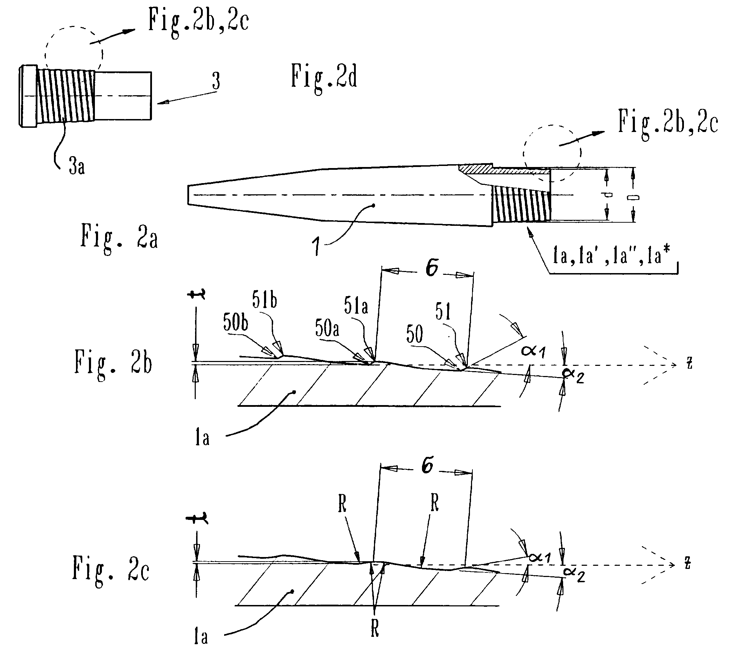

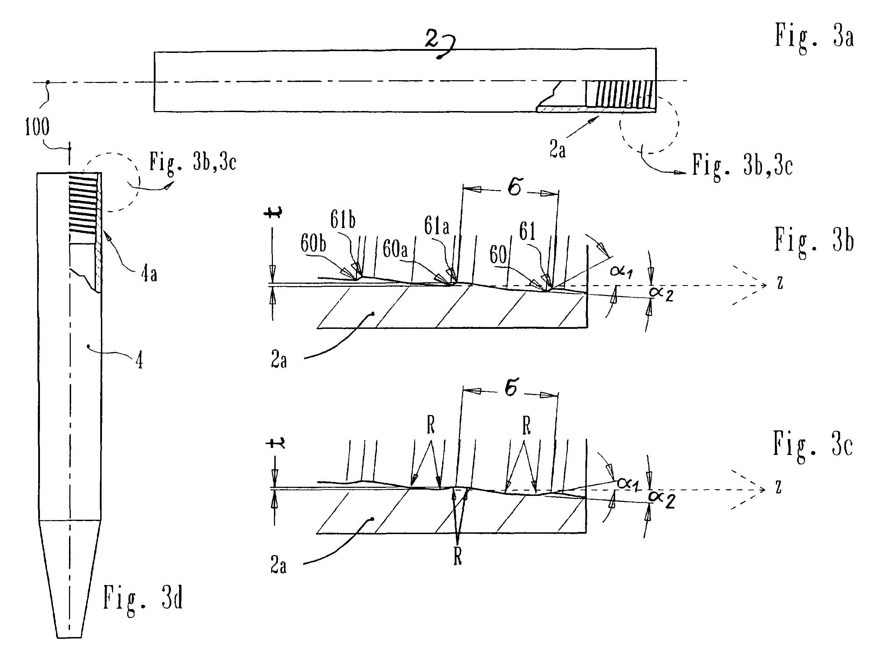

Aus der **EP-A 31 150** (Wolf-Geräte) ist ein Gerätestiel mit einer Befestigungsvorrichtung dem Fachmann zugänglich. Die Befestigungsvorrichtung wirkt so, daß sie gegen Abknicken gesichert ist und ein erhöhter und dauerhafter Halt sowohl im Stielende als auch in der Konushülse gewährleistet wird (vgl. dort Seite 3, Zeilen 14 bis 18). Dazu ist an dem Gerätestiel eine Befestigungsvorrichtung vorgesehen, die bei bequemer, einfacher und schneller Bedienung einen dauerhaft festen Sitz gewährleistet, was dadurch erreicht wird, daß der als Hülsenkörper zusammen mit einem hinteren Stopfenabschnitt einstückig aus Kunststoff gespritzte Stielkonus eine innere Verstärkungseinlage aufweist. Zusätzlich zeigt die dortige Figur 2 (erläutert auf Seite 5) am vorderen Konus des Gerätestiels und in einem konisch ausgebildeten Aufnahmeabschnitt ein Außengewinde bzw. Innengewinde, die ebenfalls konisch zulaufend ausgebildet sind, wobei die Zahnhöhe (Steghöhe) des Gewindes aber ein solches Maß aufweist, das eine axial gerichtete Enformung ohne Öffnung der formenden Gewindebacken nicht denkbar erscheinen läßt, vgl. dort auch Seite 6, Zeile 15 bis Seite 7, Zeile 18.

Die Erfindung **geht von der Aufgabe aus**, eine lösbare Verbindung von Hülsenteilen zu schaffen, die leicht gefertigt und leicht gelöst werden kann, aber gleichwohl eine hohe Haltekraft bei geschlossener Verbindung hat. Das wird mit Anspruch 1, 7 oder Anspruch 11 bzw. 12 erreicht.

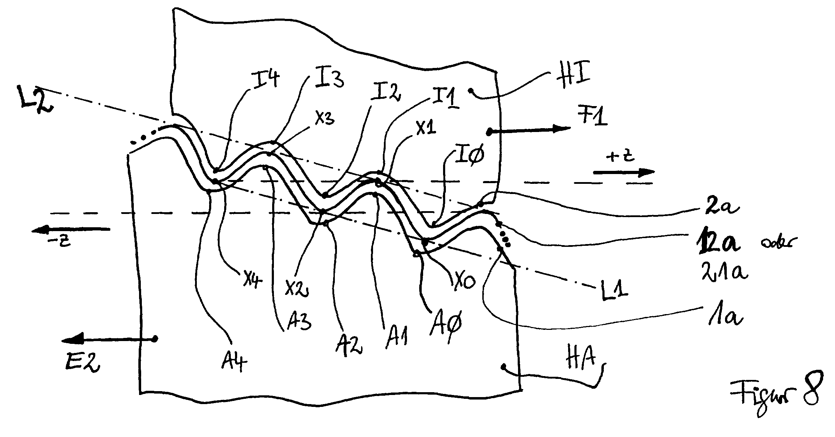

Die wendelförmig verlaufenden Rippen, Segmente oder Segmentteile befinden sich dabei auf einer konischen Hüllfläche, bei der die Tiefe der Fügekontur (Rippe oder Segement) in einem definierten Verhältnis zum Konuswinkel der Hüllfläche steht und so ausgelegt ist, daß die Fügekontur mit leicht plastischer oder elastischer Verformung entformt werden kann. Das wird erreicht, wenn jede Hinterschneidung (Erhöhung der Fügekontur) so gestaltet ist, daß die von ihr gebildete Fügekontur beim Entformen während der Bewegung in Entformungsrichtung +z oder -z nicht erneut in eine andere Hinterschneidung des Werkzeuges "einrasten" kann (Anspruch 1, Anspruch 7, Anspruch 12). Stattdessen wird sie elastisch - oder in geringem Maße plastisch - an dem nächsten bzw. übernächsten Formwerkzeug-Vorsprung vorbeigeführt (Anspruch 7), wobei Anspruch 7 sich einfacher erschließt, wenn er unter Heranziehung der Figur 8 betrachtet wird und von dem Formwerkzeug-Vorsprung ausgegangen wird, der in der Gewindestruktur weiter innen ist.

Schraubende Entformung (zeitaufwendig) oder Entformung über auseinanderfahrende Backen (kostenaufwendig) werden erfindungsgemäß ersetzt durch eine im wesentlichen rein translatorisch (in Achsrichtung z) gerichtete Entformung (Anspruch 3,5), obwohl das entformte Teil ein schraubend zu fügendes Teil ist.

Alle Arten von Gewindeelementen sind einsetzbar (Anspruch 4), sie können zur weiteren Erleichterung der Entformung an ihrem Kamm oder an ihren Kanten abgerundet sein (Anspruch 6).

Die mit der Erfindung geschaffene Verbindung beinhaltet zumindest eines der Gewindeelemente, so daß sich bei der Verbindung mit bereits einer Umdrehung die gleichzeitig feste und dennoch leicht lösbare Verbindung der Hülsen ergibt. Trotz der einen Umdrehung sind alle Gewindegänge (beispielsweise 10) gleichzeitig im Eingriff und ergeben eine Verbindung die einerseits fast so schnell wie ein Bajonettverschluß gefügt (nur mit deutlich größerem Drehwinkel) wird und andererseits weitgehend die Haltekräfte eines üblichen zylindrischen Gewindes hervorbringt (nur mit deutlich reduziertem Drehwinkel).

Die Erfindung ermöglicht somit eine Gewinde-Schnellverbindung von Hülsen oder Hülsenstücken (Anspruch 11, Anspruch 12) für die Herstellung von Schreibgeräten, die dazuhin preiswert ist.

Die mit der Vorrichtung (Anspruch 7) oder mit dem Verfahren (Anspruch 1) hergestellten Hülsenstücke können als solche beschrieben werden, die einen "konischen Gewindeabschnitt" haben (Anspruch 12, Anspruch 11). Dabei ist der Gewindegrund auf einer gegenüber der Entformungsachse geneigten Oberfläche vorgesehen, welche Oberfläche eine hypothetische Fläche ist, da sie als ein Verbindungskonus einer wendelförmigen Gewinde-Grundlinie zu sehen ist. Diese Gewinde-Grundlinie verläuft schräg und ist in ihrer Neigung so auf die Höhe der Gewindestege abgestimmt, daß eine erste Gewindesteghöhe im wesentlichen dasselbe radiale Maß hat, wie der übernächste Gewindegrund, so daß in Entformungsrichtung +z oder -z ein Gewindesteg nur einmal an der ihn bildenden Formwerkzeug-Erhöhung plastisch oder elastisch verformt wird und danach von der danebenliegenden Formwerkzeug-Erhöhung nicht mehr bleibend verformt werden kann, insbesondere ohne Berührung oder mit nur unwesentlicher Berührung an ihm vorbeigeführt werden kann (Anspruch 12).

Das durchgehende Gewinde (Anspruch 12) kann auch so gestaltet werden, daß es mit bajonettartigen Segmenten ausgestaltet ist (Anspruch 11), wobei mehrere umfänglich beabstandete Gewindeelemente - Gewindestege, Gewindesegmente oder Gewindepunkte - in axialer Richtung hintereinander auf einer geneigten Grundfläche angeordnet sind, so daß die Gewindeelemente auf stetig versetzten (abnehmenden) radialen Niveaus liegen, um die zuvor erwähnte Bedingung zu erfüllen, daß ein durch ein Formwerkzeug gebildetes Gewindeelement nur einmal beim Entformen belastet wird.

Aus der **FR-A 2,340,183** (N.V. Philips), auch erläutert in DE-A 27 02 302 oder GB-A 1,575,034 ist ein Verfahren zum Herstellen eines aus Kunststoff bestehenden drehsymmetrischen Gleitlagers bekannt, welches "untiefe Schmiermittel-Pumprillen" aufweist. Diese Lager haben einander entgegenwirkend pumpende Rillenmuster, und trotzdem kann das dort beschriebene Gleitlager beim Entformungsprozeß in Achsrichtung aus einer Matrize gezogen werden, vgl. die DE-Schrift, Seite 5, erster Absatz. Die abgebildete Hülsenform hat eine zylindrische Innenform mit jeweils zwei beabstandeten gegensinnig wirkenden Rillenmustern, die der zuvor beschriebenen "gegensinnig wirkenden Pumparbeit" entsprechen. Das Lager kann auch andere Formen haben, vgl. dort Figuren 3, 4 und 5, versehen mit jeweils einer "schraubenlinienförmigen" Schmierrille. Diesen Dokumenten ist nicht zu entnehmen, wie entformt wird, auch ist diesen Dokumenten nicht zu entnehmen, daß eine Abstimmung einer konischen und einer gegenkonischen Grundfläche mit jeweiligen Gewindeelementen so erfolgen soll, daß jedes der Gewindeelemente bei einer im wesentlichen rein translatorischen Entformungsbewegung nicht erneut in einer Werkzeugkontur einrastet, nachdem es aus der formenden Werkzeugkontur entrastet ist.

Die Erfindung(en) werden nachfolgend anhand mehrerer Ausführungs**beispiele** erläutert und ergänzt.

**Figur 1a**, **Figur 1b**, **Figur 1c und Figur 1d**
sind Beispiele für schraubend zu verbindende Gewindeelemente 1a, 1a', 1a'', 1a* an einem Kugelschreiber-Griffstück.

**Figur 2a**
zeigt die konische Gewinde-Außenkontur 1a an einer anderen Griffspitze 1, mit Teilschnit und Durchmessern d,D (max/min) des Gewindegrundes und Gewindesteges;

**Figur 2d**
zeigt dieselbe Kontur 3a an einem - auch versenkt eindrehbaren - Kopfteil 3 eines Schreibstiftes.

**Figur 2b**, **Figur 2c**
zeigen Schnitte durch mögliche Gewinde- oder Rippenprofile davon.

**Figur 3a**
zeigt die konische Gewinde-Innenkontur 2a an einem zylindrischen Griff oder Schaft 2;

**Figur 3d**
zeigt dieselbe Kontur 4a an einem konisch zulaufenden vorderen Hülsenteil 4, das mit dem Kopfteil 3 oben verschließbar ist.

**Figur 3b**, **Figur 3c**
zeigen Schnitte durch mögliche Gewindeprofile davon.

**Figur 4a**, **Figur 4b, Figur 4c und Figur 4d**
sind jeweils unterschiedliche Momentanaufnahmen der
erfindungsgemäßen Entformung eines Außengewindes
1a im Längsschnitt. Die Entformungsbewegungen sind
mit E0, E1, E2 repräsentiert.

**Figur 5a, Figur 5b und Figur 5c**
sind unterschiedliche Momentanaufnahmen der Entformung eines Innengewindes 2a im Längsschnitt. Die
Entformungsbewegungen sind mit F0 und F1 repräsentiert.

**Figur 6a, Figur 6b und Figur 6c**
sind unterschiedliche Momentanaufnahmen der
schraubenden Fügung eines Innengewindes 2a mit
einem Außengewinde 1a an Hülsenstücken 1,2 im
Längsschnitt (Fügung von Hülsen nach Figur 2a,3a).

**Figur 7a**, **Figur 7b und Figur 7c**
sind jeweils unterschiedliche Momentanaufnahmen der
erfindungsgemäßen schraubenden Fügung eines
Innengewindes 4a mit einem Außengewinde 3a an Hülsenstücken 3,4 im Längsschnitt (Fügung von Hülsenstücken gem. Figur 2d,3d).

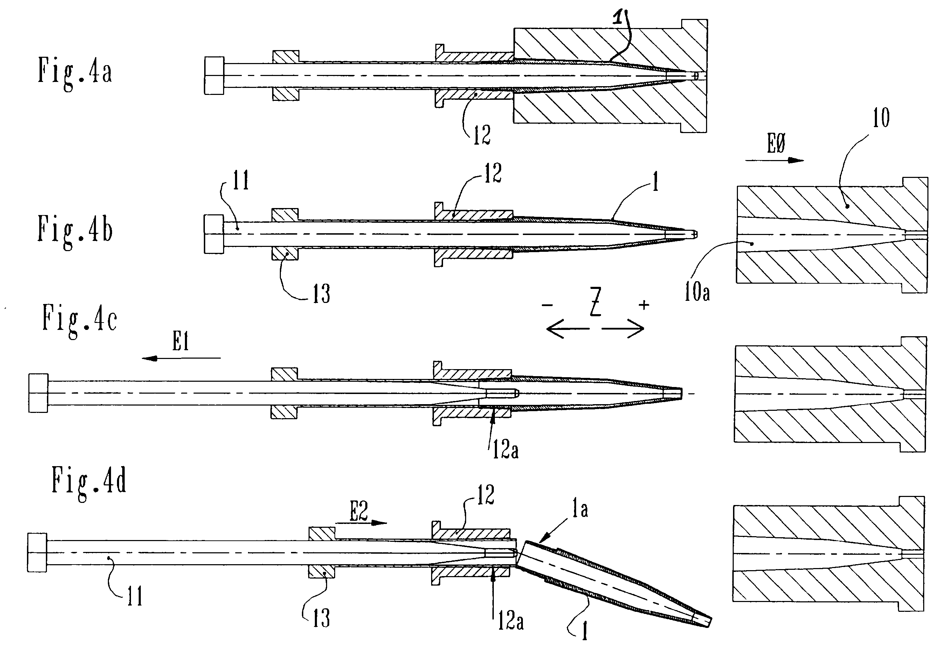

**Figur 8**
ist eine schematische (gleichzeitige) Schnitt-Darstellung der Gewindestruktur eines Innengewindes
I1,I2,I3,I4 an einer Hülse HI und des formenden Gewindewerkzeugs 12a mit seiner Außenfläche sowie der
Gewindekontur eines Außengewindes A1,A2,A3,A4
einer Hülse HA mit der es formenden Werkzeugkontur
21a, die auf der Innenfläche der Formlinie/Fläche
12a/21a liegt. Die Formfläche 12a ist trotz Darstellung
als Linie eine Repräsentation sowohl des einen Werkzeugs 12a aus Figur 4d als auch des Werkzeugs 21a
aus Figur 5c.

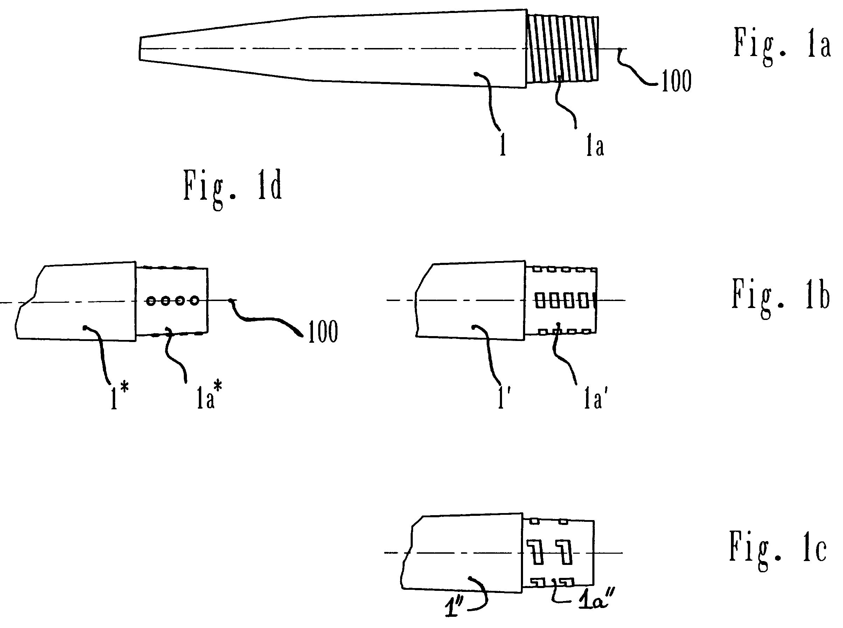

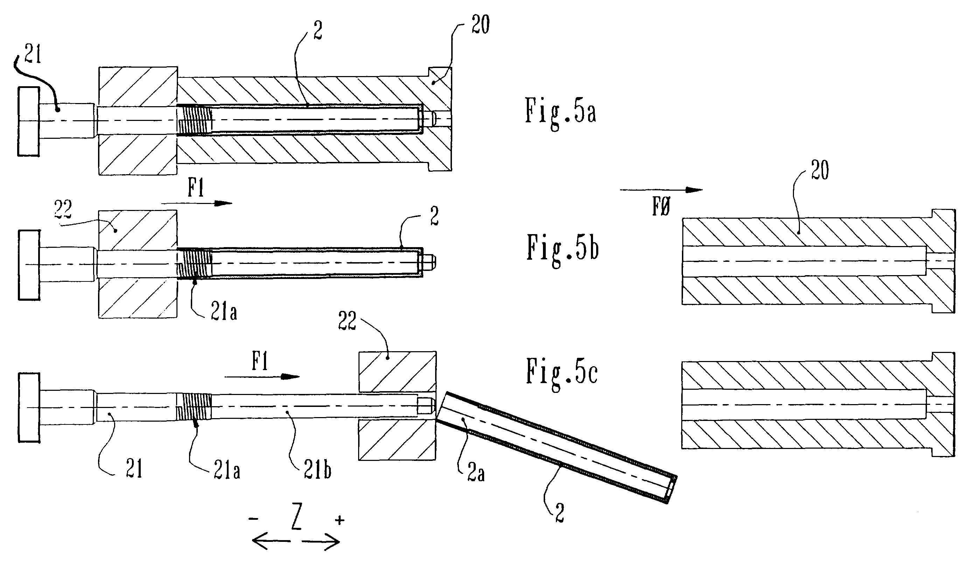

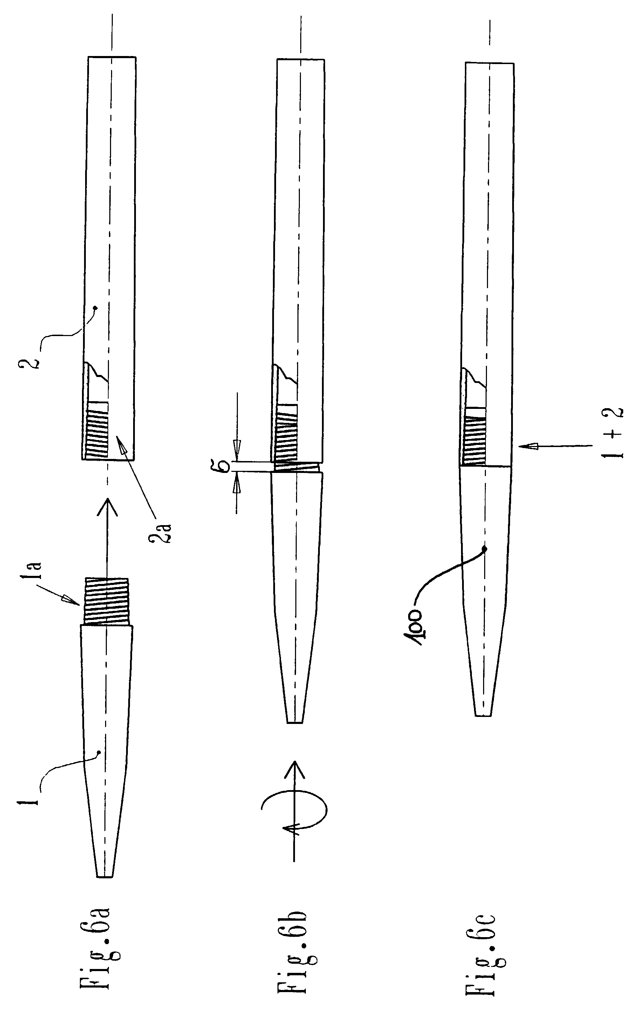

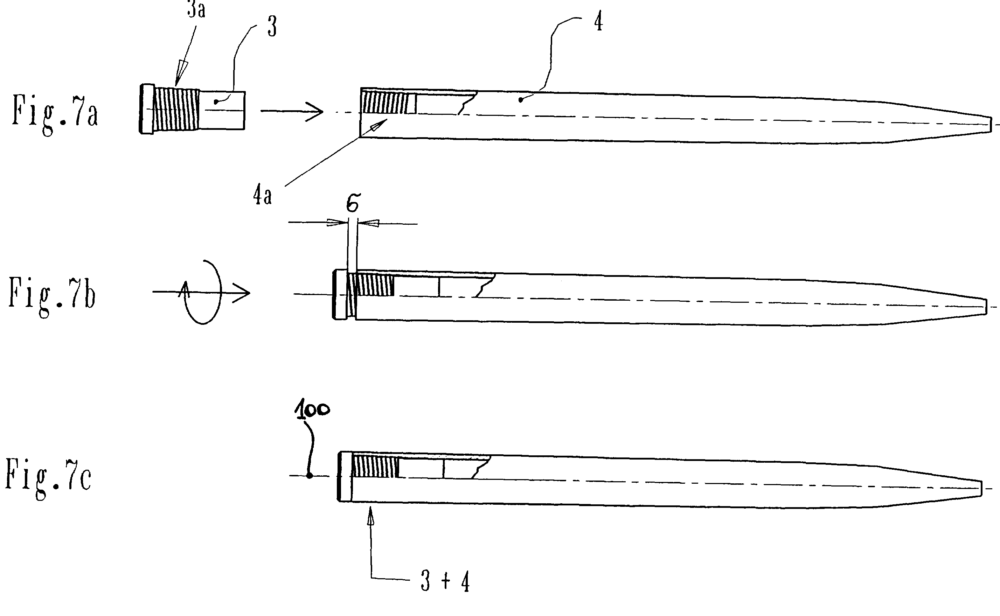

Die Verbindung 1/2 oder 3/4 (vgl. Figur 6,7)
läßt sich mit einfach aufgebauten Spritzgießwerkzeugen kostengünstig herstellen. Die Teile lassen sich
schnell und einfach schraubend fügen, nachdem sie
zuvor axial zusammengeschoben wurden.
Das Verbindungssystem besteht aus einer
wendelförmig - auf einer zylindrischen oder konischen
Außen- oder/und Innenkontur verlaufenden - Rippe
(Figur 1a). Diese Rippe kann auch unterbrochen sein
und aus Segmenten bestehen (Figur 1b). Die Segmente können auch nur teilweise wendelförmig verlaufen (Figur 1c). Die Gewindeelemente sind ihrer Kontur
und Höhe nach so gestaltet, daß sie mit einfachen
Spritzgießwerkzeugen entformt werden. Alle Bewegungen der konturgebenden Teile des Werkzeuges verlaufen ausschließlich in z-Richtung der Öffnungsrichtung
der Spritzgießmaschine (Figuren 4 und Figuren 5 zeigen die konturgebenden Bereiche zweier Werkzeuge
zur Herstellung der beiden Hülsen-Fügeteile).
Die wendelförmig verlaufenden Noppen, Punkte 1a*, Segmente 1a' oder Segmentteile 1a" können auch nur an einem der zu verbinden Fügeteile
angeordnet sein, wenn sich am anderen Fügeteil in
diese eingreifende nicht wendelförmig gestaltete Konturen 1* befinden (Figur 1d).
Die wendelförmig verlaufenden Noppen,
Punkte, Segmente oder Segmentteile befinden sich auf
einer konischen Hüllfläche, bei der die Tiefe der Fügekontur (Rippe oder Segement) in einem definierten Verhältnis zum Konuswinkel der Hüllfläche steht und so
ausgelegt ist, daß die Fügekontur mit elastischer Verformung entformt werden kann. Das wird dadurch erreicht,
daß an jeder Hinterschneidung vorbei die Fügekontur
translatorisch nur einmal entformt wird.
Es wird nur einmal entformt, wenn entsprechend den folgenden Beziehungen ausgelegt wird
(Figuren 2 und Figuren 3):

$\varepsilon_m$ [%]     mögliche Materialdehnung des Kunststoffes
         der Hülsen.
D [mm]    größter Durchmesser der konischen Hülse
         1a, 2a.
d [mm]    kleinster Durchmesser der konischen Hülse
         1a, 2a.
t [mm]    Tiefe der Rippe.
$\sigma$ [mm]    Steigung der Wendel oder Rippenabstand.
$\alpha_1$ [°]    Entformungswinkel.
$\alpha_2$ [°]    Konuswinkel in der Hülse 1a, 2a.

1. $t = d \cdot \varepsilon_m/200$  d ist durch die konstruktiven Abmessungen gegeben,
2. $\alpha_2' = \arcsin(t/\sigma)$  $\sigma$ ist nach funktionalen Anforderungen zu wählen. $\alpha_2 \geq \alpha_2'$

**Figur 2a** zeigt die konische Außenkontur,
**Figuren 2b und 2c** zeigen Schnitte durch mögliche
Rippenprofile. **Figur 3a** zeigt die konische Innenkontur,
**Figuren 3b und 3c** zeigen Schnitte durch mögliche
Rippenprofile.
Die mögliche Materialdehnung $\varepsilon_m$ ist abhängig
vom Kunststoff, dem Entformungswinkel $\alpha_1 < 90°$ und
den Entformungsradien R. Aus $\varepsilon_m$ und d ergibt sich mit
Gleichung 1 die mögliche Rippentiefe t. Aus t und der
gewünschten Steigung bzw. dem gewünschten Rippenabstand $\sigma$ ergibt sich nach Gleichung 2 ein Bemes-
sungs-Winkel $\alpha_2'$.
Der Konuswinkel $\alpha_2$ des Gewindestücks 1a/3a
oder 2a/4a der Hülse 1 oder 2 oder 3 oder 4 sollte idealerweise größer oder gleich $\alpha_2'$ sein. Wird er größer
gewählt, ist für das Drehfügen (nach dem anfänglichen
Ineinanderstecken) ein kleinerer Verschluß-Drehwinkel
nötig; wird er kleiner gewählt, so nähert sich das Entformen der Hülse dem mehrfachen Rasten und Entrasten
an. Der Bemessungs-Winkel $\alpha_2'$ kann also als "Grenzwinkel" interpretiert werden.
Wird ein unelastischerer Kunststoff gewählt,
ergibt sich ein spitzeres $\alpha_1$ (Figur 2c) als bei elastischerem Kunststoff (Figur 2b).

Die Abmessung der formgebenden Kontur am Formwerkzeug ist so bemessen, daß ein Gewindeelement (Steg 51/61 mit benachbarter Nut 50/60) gegenüber dem im σ-Abstand (Steigung des Gewindes) benachbarten Gewindeelement **radial versetzt ist**. Normale - schwer entformbare - Gewinde haben keinen radialen Maßunterschied. Mit dem sich periodisch über die Gewindelänge wiederholenden radialen Maßunterschied ergibt sich der konische Gewindeabschnitt 1a,2a,3a,4a.

Ein Gewindeelement ist für ein Außengewinde und ein Innengewinde in den **Figuren 2a und 2c bzw. 3b und 3c** gezeigt. Die in Achsrichtung bzw. Entformungsrichtung z hintereinander angeordneten Gewindeelemente 50/51, daneben 50a, 51a, wieder daneben 50b, 51b bzw. in derselben Struktur das Innengewinde gemäß Figur 3b mit dem Gewindeelement 60,61, dem entgegen der Entformungsrichtung z daneben angeordneten nächsten Gewindeelement 61a,60a und dem übernächsten Gewindeelement 60b,61b haben sonstige Abmessungen t,σ und die beiden Bestimmungswinkel $\alpha_1,\alpha_2$, wobei $\alpha_2$ den Konus für die Gewindegrundfläche bzw. die geneigte Gewindegestalt definiert.

Die Maße für diese Werte sind anhand der zuvor angegebenen Gleichung (1) und (2) beschrieben und der Entformungswinkel $\alpha_1$ ist stark kunststoffabhängig. Sofern eine erleichterte Entformung bei härteren Kunststoffen gewollt ist, können die in Figur 2b und 3b noch scharfen Übergänge und Kanten in den Gewindeelementen 50/51 und 60/61 abgerundet werden, wofür eine Mehrzahl von Radien R in der Figur 2c und 3c eingezeichnet ist.

Die Entformungsbewegung eines Außengewindes ist in den **Figuren 4** mit Momentanaufnahmen erläutert. Den zuvor umschriebenen Gewindeabschnitt formt eine gewindeformende Hülse 12, die an einer Matrize 10 konzentrisch anliegt, um den Außendurchmesser eines Formhohlraums 10a zu bilden. In diesen Hohlraum wird ein Dorn 11 eingeführt, dessen Außendurchmesser um die Dicke der gewünschten Hülse 1 geringer ist, als der zuvor erwähnte Innendurchmesser von Matrize 10 und Gewindehülse 12. Stirnseitig hat der Dorn 11 einen etwa zylindrischen Stößel, der die vordere Austrittsöffnung der konisch zulaufenden Griffspitze 1 - des Formteils - bildet. In die Gewinde-Formhülse 12 eingreifend ist ein Auswerfer 13 dargestellt, der das rückwärtige Ende des zu formenden Gewindeabschnitts 1a im Gewinde-Formungsabschnitt 12a der Gewinde-Formungshülse 12 festlegt. Er liegt gleitend und eng an dem Dorn 11 an und ist gegenüber diesem verschieblich.

In der so dargestellten Zusammenstellung anhand der Figur 4a wird flüssiger Kunststoff in den Formhohlraum eingespritzt.

Nach Erkalten wird gemäß Figur 4b die erste Matrize 10 mit der Entformungsbewegung E0 in +z-Richtung von der Griffhülse 1 wegbewegt. Diese translatorische Bewegung wirft keine Probleme auf. Danach wird der Dorn 11 gemäß Figur 4c in der Bewegungsrichtung E1 zurückgezogen, während der Auswerfer 13 gegenüber der Gewinde-Formungshülse 12 unverändert seine Lage beibehält.

Gemäß Figur 4d wird schließlich über den Auswerfer 13 mit seiner Entformungsbewegung E2 das fertige Griffteil 1 mit dem konischen Gewindeabschnitt 1a nach vorne ausgeworfen, ohne daß eine Backenbewegung in einer Richtung senkrecht zu der Auswurfbewegung E2, die in +z-Richtung verläuft, erforderlich wäre und ohne daß eine schraubende Bewegung erforderlich ist, weder für das Gewinde-Formungsteil 12 noch für die Griffhülse 1.

Aufgrund der konischen Gestalt des Gewindes 1a, das an seinem rechten (inneren) Ende einen größeren Radius hat als an seinem linken (äußeren) Ende, entsprechend der Figur 2a, kann die Entformungsbewegung des Gewindes ohne Schaden für die Gewindegänge und Gewindestege in kurzer Zeit durchgeführt werden.

In vergleichbarer Weise arbeitet der Herstellprozeß für ein Innengewinde, erläutert anhand der **Figuren 5a bis 5c**. Auch hier ist eine Matrize 20 mit einem Formhohlraum vorgesehen, die stirnseitig dicht an einem Auswerferblock 22 in Figur 5a anliegt. Die Außenkontur des formenden Hülsenstücks 2 liegt damit fest. Ein Stößel 21 wird in den Formhohlraum eingefahren, um zwischen seiner Außenfläche und der Innenfläche der Matrize 20 einen Formhohlraum für den Spritzguß der Hülse 2 zu bilden. An dem Stößel 21 ist ein Gewinde-Formungsbereich 21a vorgesehen, der im eingefahrenen Zustand direkt hinter dem Auswerfer 22 zu liegen kommt. In der so beschriebenen Zusammenführung ist die Anordnung bereit, mit Kunststoff im Spritzgießverfahren gefüllt zu werden, wie die Figur 5a veranschaulicht.

Bei der Entformung wird zunächst das problemlose Matrizenteil 20 in der Bewegung F0 axial abgeschoben, wobei F0 in +z-Richtung verläuft.

Danach kann mit dem klotzförmigen Auswerfer 22 der weitgehend erstarrte Hülsenteil 2 von dem konischen Gewinde-Bildungsabschnitt 21a axial abgeschoben werden, auch in +z-Richtung, wobei der Auswerter 22 eine axiale Bewegung in Richtung F1 vornimmt, die etwa der Länge des Dorns 21 entspricht. In gleicher Weise kann aber auch der Dorn 21 zurückgezogen werden, während der Block 22 in Ruhestellung verbleibt, so daß eine -F1-Bewegung die Entformung der Hülse 2 erreicht. Auch hier wird keine radiale Bewegung benötigt, um das Hülsenstück 2 zu entformen, es wird keine Drehbewegung der Hülse 2 oder des Dorns 21 angewendet, so daß die Entformung sicher, schonend und schnell erfolgen kann.

Die Zusammenfügung eines Griffstücks 1 und einer Schafthülse 2 ist in ihren drei Stufen in den **Figuren 6** beschrieben. Figur 6a zeigt das stückweise axiale Ineinanderschieben des konischen Außengewindes 1a und des konischen Gegengewindes (Innengewindes) 2a bis auf einen Abstand, der - bei hier gewähltem $\alpha_2' = \alpha_2$ - der Gewindesteigung $\sigma$ entspricht. Danach wird eine schraubende Bewegung in der Figur 6b eingesetzt, die etwa eine Umdrehung sein kann, um alle Gewindeabschnitte zusammen in lösbar haltenden Eingriff gemäß Figur 6c zu bringen. In vergleichbarer Weise arbeitet die Zusammenfügung der Hülsenteile 3 und 4: Axiales Ineinanderstecken bis auf einen kurzen Restweg $\sigma$ - bei hier gewähltem $\alpha_2' = \alpha_2$ - und anschließendes Drehfügen zum lösbaren aber festen Aneinanderfügen. Die Figur 7 kann auch so betrachtet werden, daß das Endstück 3 auf das noch freie Ende der Hülse 2 gemäß Figur 6 aufgeschraubt wird, so daß ein Kugelschreiber durch drei Teile hülsenförmiger Natur gebildet wird, von denen jeweils zwei mit der hier beschriebenen Fügung von konischen Gewinden miteinander in Eingriff kommen. Der kurze Restweg $\sigma$ verändert sich mit geänderter Wahl für $\alpha_2$. Er wird kleiner, wenn $\alpha_2$ größer als $\alpha_2'$ wird.

**Figur 8** veranschaulicht ein konisches Gewinde, wobei der Gewindebildner (das Werkzeug, das einen Gewindeformungs-Abschnitt für ein Außengewinde oder ein Innengewinde trägt) nur durch eine einzige Linie 12a oder 21a in der Mitte der Figur 8 dargestellt ist.

(a) Oberhalb dieser Linie wird eine Hülse HI abschnittsweise gezeigt, die ein Innengewinde trägt.

(b) Unterhalb der Linie 21a wird eine Hülse HA gezeigt, die ein Außengewinde trägt.

Die Hülse HI mit Innengewinde entspricht den Figuren 5, wobei korrespondierend die Entformungsbewegung F1 auch in der Figur 8 dargestellt ist. Die Hülse HA mit Außengewinde entspricht den Figuren 4, wobei in der Figur 8 korrespondierend zu den Figuren 4 auch die Entformungsbewegung E2 dargestellt ist.

An der Figur 8 kann ersehen werden, welche Korrespondenzen zwischen einer bestimmten Formwerkzeug-**Erhöhung** (Teil des Werkzeuges, der eine Vertiefung in dem Innengewinde oder Außengewinde bewirkt) und einer dazu benachbarten Formwerkzeug-**Vertiefung** besteht, die für den entsprechend benachbarten Vorsprung an demselben des zuvor erwähnten Gewindes verantwortlich zeichnet.

Mit "X" sind alle Werkzeug-Vorsprünge und -Vertiefungen bezeichnet, mit "A" alle Außengewinde-Erhöhungen und - Vertiefungen und mit "I" alle Innengewinde-Erhöhungen und - Vertiefungen.

(a) Beispielsweise erzeugt eine Formwerkzeug-Erhöhung X1 eine entsprechende Innengewinde-Vertiefung I1 in der Hülse HI. Die in -z-Richtung benachbarte Erhöhung I2 wird von der benachbarten Formwerkzeug-Vertiefung X2 geformt und die dazu weiter benachbarte Formwerkzeug-Erhöhung X3 formt die diesbezügliche Innengewinde-Vertiefung I3. Für das konische Gewinde kann eine Beziehung aufgestellt werden, zwischen der nächstfolgenden Innengewinde-Erhöhung I4 (als Folge der diesbezüglichen Werkzeug-Vertiefung X4) und der zuvor erwähnten Formwerkzeug-Erhöhung X1. Ist das radiale Maß von I4 dasselbe, wie dasjenige von X1, so läßt sich die HI in Entformungsrichtung F1 problemlos entformen, ohne daß I4 außer an dem ihn formenden Werkzeug-Vorsprung X3 noch an einem weiteren Werkzeug-Vorsprung berührend passieren muß. Stattdessen passiert er alle Werkzeug-Vorsprünge X1 und alle davorliegenden (in Entformungsrichtung +z), ohne sie zu berühren.

Die entsprechende Linie L2 als Verbindung aller Formwerkzeug-Erhöhungen X1,X3,... zeigt den Winkel $\alpha_2$, wie er zuvor umschrieben wurde.

(b) In analoger Weise, wie oben für die Hülse HI beschrieben, kann dieselbe Entformungsbewegung E2 und dieselbe Korrespondenz zwischen der Formwerkzeug-Vertiefung X1 und dem diesbezüglichen Gewindesteg A1 und der um mehr als eine Gewindesteigung $\sigma$ in Richtung E2 beabstandete Formwerkzeug-Steg X4 aufgestellt werden. Die Verbindung aller Formwerkzeug-Erhöhungen liegen auf der Kegelfläche L1, die strichpunktiert eingezeichnet ist.

Um die Entformung von Gewinden in Kuststoff-Hülsenstücken 1,2,3,4 zu erleichtern und die Herstellungskosten zu senken, wird eine konische Gewindestruktur ($\alpha_1, \alpha_2, t$) vorgeschlagen. Bei ihr und bei den diesbezüglichen Formwerkzeugen sind die in translatorischer Richtung z oder -z benachbarten Gewindeelemente 50,60,51,61 radial so beabstandet, daß jedes Gewindeelement beim Entformen E0,E1,E2 oder F0,F1 nur einmal "entrastet", um kein zweites Mal einzurasten.

**Patentansprüche**

1. **Herstellverfahren** für aus ihrer Form (12,21) erleichtert entformbare Kunststoff-Hülsenstücke (1,2), die lösbar zusammengefügt werden können, in erster Linie des hinteren Schaftes (2) und der vorderen Griffhülse (1) oder des rückwärtigen Kopfteils (3) und vorderen Schaftes (4) eines Schreibstiftes, umfassend die Verfahrensschritte:

(a) Anformen einer in Achsrichtung (z,100) periodischen Folge von Gewindeelementen (1a,1a',1a'',1a*) auf eine schwach konische Gewinde-Grundfläche eines ersten Hülsenstücks (1), mittels einer ersten Werkzeugkontur;

(b) Anformen einer in Achsrichtung (100,z) periodischen Folge von Gewindeelementen (1a,1a',1") auf eine schwach gegenkonische Grundfläche eines anderen Hülsenstücks (2), mittels einer zweiten Werkzeugkontur;

(c) Entformen der beiden Hülsenstücke (1,2); dadurch gekennzeichnet, daß

(d) der Neigungswinkel ($\alpha_2$) der konischen und gegenkonischen Grundfläche so auf eine radiale Höhe (t) der Gewindeelemente (1a,1a',1",1a*) abgestimmt ist, daß jedes davon bei im wesentlichen rein translatorischer Entformungebewegung (E1,E2) nicht erneut vollständig in der Werkzeugkontur einrastet.

**2.** Verfahren nach Anspruch 1, bei dem eine geringe plastische Verformung beim Entformen nicht als "Rasten" angesehen wird bzw. bei der translatorischen Entformungsbewegung die Gewindeelemente nur gering plastisch verformt werden.

**3.** Verfahren nach einem der obigen Ansprüche, bei dem mit einer elastischen Verformung der Gewindeelemente in Richtung der Achse (z,100) entformt wird.

**4.** Verfahren nach einem der vorigen Ansprüche, bei dem als Gewindeelemente Stege, Segmente oder Punkte in Richtung der Achse (z,100) entformt werden.

**5.** Verfahren nach einem der erwähnten Ansprüche, bei dem die Gewindeelemente nur in Richtung der Achse (z,100) entformt werden, insbesondere ohne oder ohne wesentliche radiale Backenbewegung oder Schraubbewegung von die erste oder zweite Werkzeugkontur (12a,21a) tragenden Formwerkzeugen (12,21) entformt wird.

**6.** Verfahren nach einem der vorangehenden Ansprüche, bei dem die Gewindeelemente abgerundete (R) Kanten haben.

**7. Formwerkzeug** zur Durchführung des Verfahrens nach einem der vorigen Ansprüche, bei dem

(a) eine Negativ-Kontur (12a,21a) einer Gewindestruktur, insbesondere Stege, Segmente, Noppen oder Punkte, eines Innen- oder Außengewindes (1a,2a) einer Hülse (1,2) in einem Formwerkzeug (12,21) vorgesehen ist;

(b) ein Vorsprung (X1) der Negativ-Kontur der Gewindestruktur zur Formung einer Vertiefung (50,60,I1) in der Hülsen-Gewindenstruktur (1a,2a) bezüglich

- der nächsten mindestens im Abstand (σ) der Gewindesteigung entgegen der Entformungsrichtung (z,100) der Hülse benachbarten, oder

- der übernächsten in Achsrichtung (z,100) benachbarten

Formwerkzeug-Vertiefung (X4) der Negativ-Kontur der Gewindestruktur zur Formung der übernächsten bzw. darauf folgenden Erhöhung (51b,61b,I4) der Hülsen-Gewindestruktur (1a,2a) radial nicht oder nur geringfügig vorsteht.

**8.** Formwerkzeug nach Anspruch 7, bei dem eine Verbindungslinie (L1,L2) aller Formwerkzeug-Vorsprünge eine gegenüber der Achse (100) und der Entformungsrichtung (z) des Formwerkzeugs (12,21) oder des Hülsenteils (1,2) geneigte ($\alpha_2$) erste gerade Linie ergeben.

**9.** Formwerkzeug nach Anspruch 8 oder 7, bei dem eine Verbindungslinie (L1,L2) aller Formwerkzeug-Vertiefungen eine gegenüber der Achse (100) oder der Entformungsrichtung (z) des Formwerkzeugs (12,21) oder des Hülsenteils (1,2) geneigte ($\alpha_2$) - insbesondere unter demselben Winkel ($\alpha_2$) wie die vorerwähnte erste Linie geneigte - zweite gerade Linie ergibt.

**10.** Formwerkzeug nach einem der Ansprüche 7 bis 9, bei dem die zweite vor einer Formwerkzeug-Erhöhung (X1) liegende Formwerkzeug-Vertiefung (X4) - in Entformungsrichtung (z) betrachtet - radial etwa das gleiche Maß hat, wie die erwähnte Formwerkzeug-Erhöhung (X1), so daß

(a) das Formwerkzeug (21) im Gewinde-Formungsbereich (21a) für die Formung eines konischen Innengewindes (2a) in Richtung (z) der Entformungsbewegung (F1) der Außenhülse leicht konisch zulaufend ausgebildet ist; oder

(b) der Gewinde-Formungsabschnitt (1a) des Formwerkzeuges (12) zur Formung eines konischen Außengewindes (12a) in Richtung (z) der Entformungsbewegung (E2) des Hülsenstücks (1) mit Außengewinde leicht konisch aufgeweitet ist.

**11. Schreibgerät-Hülsenstück** mit konisch verlaufendem Gewinde-Schnellverbindungsabschnitt (1a,2a) für einen Kugelschreiber, Druckbleistift oder Tintenschreiber, erhältlich nach einem der vorstehenden Verfahrensansprüche oder erhältlich mit einer Vorrichtung nach einem der vorhergehenden Vorrichtungsansprüche, bei welchem Hülsenstück (2,4,HI,HA) mehrere, insbesondere mehr als zwei, bajonettartige Gewindeelemente, insbesondere Stege, Segmente oder Punkte, umfänglich beabstandet und in axialer Richtung (z, 100) hintereinander, aber auf stetig versetzten radialen Niveaus auf einer konischen Grundfläche (L1,L2) angeordnet sind.

12. **Schreibgerät-Hülsenstück** mit konisch verlaufendem Gewinde-Schnellverbindungsabschnitt (1a,2a) mit konischem Gewindegrund, erhältlich nach einem der erwähnten Verfahrensansprüche oder hergestellt mit einer Vorrichtung nach einem der erwähnten Vorrichtungsansprüche, bei welchem Hülsenstück (2,4,HI,HA) ein wendelförmig verlaufender - nicht unterbrochener - Gewindesteg (1a,2a) radial so dimensioniert ist, daß - im Schnitt gesehen - eine erste Gewindesteghöhe (I4,A1) im wesentlichen dasselbe radiale Maß hat, wie der übernächste Gewindegrund (I1,A4) in Entformungsrichtung (+z,-z).

**Claims**

1. **Manufacturing process** for sleeve elements (1,2) made of plastics material, which elements are easily separable from their mold (21,12) and are adapted to be releasably secured, primarily one of a rear shaft (2) and a front gripping sleeve (1) or a rear end piece (3) and a front shaft (4) of a writing instrument, comprising the steps of

   (a) providing a series of thread elements (1,1a',1a'',1a*) periodical in an axial direction (z,100) on a slightly conical thread basis of a first sleeve element (1) by using a first tool contour;
   (b) providing a series of thread elements (1a,1a',1'') periodical in said axial direction (z,100) on a slightly counter-conical basic surface of another sleeve element (2) by using a second tool contour;
   (c) separating both said sleeve elements (1,2) from their injection mold;
   characterized in that
   (d) an angle of inclination ($\alpha_2$) of at least one of said conical and counter-conical basic surfaces being adapted to the radial height (t) of said thread elements (1a,1a',1a'',1a*) such that during separating said elements and said mold with substantially only translational (axial) movement (E1,E2), none of them fully locks (engages) into a tool contour again.

2. The process of claim 1, a minor plastic or ductile deformation during separating said elements and their mold not being regarded as "locking (into)", or said deformation of said thread elements being only minor during said translational separation.

3. Process according to one of the above claims, wherein said separation from the mold in direction of the axis (z,100) is effected by an elastic deformation of said thread elements.

4. Process according to one of the above claims, wherein said thread elements separated from the mold in direction of the axis (z,100) are webs, segments or points.

5. Process according to one of the aforementioned claims, wherein the separation of said thread elements from the mold is effected in only axial direction (z,100), particularly without or without substantial radial follower motion or turning motion of form tools (12,21), carrying the first or the second tool contour (12a,21a).

6. Process according to one of the prior claims, wherein said thread elements have rounded (R) edges.

7. **Form tool** for carrying out the process according to one of the aforementioned claims, comprising

   (a) a form tool part (12,21), having a negative contour (12a,21a) of a thread structure, preferably webs, segments, naps or points, of one of a female and male thread (1a,2a) of a sleeve (1,2);
   (b) said negative contour of said thread structure having a projection (X1) for forming a recess (50,60,I1) in the thread structure (1a,2a) of the sleeve, said projection radially not protruding or protruding only slightly with respect to

      a next form tool recess (X4) of the negative contour of said thread structure which recess (X4) being adjacent at least at a distance ($\sigma$) of the thread pitch opposed to the separating direction (z,100); or a next but one form tool recess (X4) of the negative contour of said thread structure which recess (X4) being adjacent in axial direction (z,100)

      for the molding of the next but one (the next one after the next) or the subsequent elevation (51b,61b,I4) of the thread structure (1a,2a) of the sleeve.

8. Form tool according to claim 7, wherein a connecting line (L1,L2) of all form tool projections constitutes a first straight line which is inclined or slant ($\alpha2$) with respect to said axis (100) and said separating direction (z) of said form tool (12,21) or said sleeve (1,2).

**9.** Form tool according to claim 8 or 7, wherein a connecting line (L1,L2) of all form tool recesses constitutes a second straight line which is inclined ($\alpha_2$) - particularly by the same angle ($\alpha_2$) as the aforementioned first line - with regard to said axis (100) or said separating direction (z) of said form tool (21,12) or said sleeve member (1,2).

**10.** Form tool according to one of the claims 7 to 9, having a thread molding section and wherein - viewed in separating direction (z) - a form tool recess (X4) located two places prior to a form tool projection (X1) has substantially the same radial dimension as said form tool projection (X1), so that one of

> (a) said form tool (21) in the thread molding section (21a) is - viewed in direction (z) of the separating movement (F1) of the external sleeve - slightly conically reduced for the molding of a conical **inner thread** (2a); and
> (b) the thread molding section (1a) of said form tool (12) has a slightly conical expansion - viewed in direction (z) of the separating movement (E2) of said sleeve element (1) with outer thread - for the molding of a conical **outer thread** (12a).

**11.** **Sleeve element** for a writing instrument with conical quick-connecting thread section (1a,2a) for one of a ball-point pen, pencil with retractable point and ink writer, manufactured according to one of the aforementioned process claims or with an apparatus according to one of the aforementioned apparatus claims, wherein said sleeve element (2,4,HI,HA) is provided with several, particularly more than two, bayonet-type thread elements, preferably webs, segments or points, being circumferentially spaced with respect to each other and - in axial direction (z,100) - located one after the other, but at continuously offset radial levels on a conical basic surface (L1,L2).

**12.** **Sleeve element** for a writing instrument having a conical quick-connecting thread section (1a,2a) and a conical thread basic surface manufactured according to one of the aforementioned process claims or with an apparatus according to one of the aforementioned apparatus claims, wherein said sleeve element (2,4,HI,HA) is provided with a helical (spiral) - continuous - thread web (1a,2a) being radially dimensioned such that - viewed in section - a first thread web height (I4,A1) has substantially the same radial extension as the next but one (the next one after the next) thread root (I1,A4) in separating direction (+z,-z).

## Revendications

**1.** Procédé de fabrication de sections de manchon (1, 2) en matière plastique, qui peuvent être extraites facilement de leur moule (12, 21) et qui peuvent être assemblées de façon amovible, en particulier du corps arrière (2) et du manchon de préhension avant (1) ou de la partie de tête arrière (3) et du corps avant (4) d'un crayon, comprenant les étapes suivantes :

> (a) formation d'une suite, périodique dans la direction axiale (z, 100), d'éléments filetés (1a, 1a', 1a'', 1a*) sur une surface de base de filetage légèrement conique d'une première section de manchon (1), au moyen d'un premier contour d'outil ;
> (b) formation d'une suite, périodique dans la direction axiale (100, z), d'éléments filetés (1a, 1a', 1a'') sur une surface de base légèrement conique dans l'autre sens d'une autre section de manchon (2), au moyen d'un deuxième contour d'outil ;
> (c) extraction des deux sections de manchon (1, 2) ;
> caractérisé en ce que
> (d) l'angle d'inclinaison ($\alpha_2$) des surfaces de base conique et conique dans l'autre sens est adapté à une hauteur radiale (t) des éléments filetés (1a, 1a', 1a'', 1a*) de telle sorte que chacun d'eux ne s'enclenche pas de nouveau complètement dans le contour d'outil lors du mouvement d'extraction (E1, E2) globalement purement translatoire.

**2.** Procédé selon la revendication 1, dans lequel une petite déformation plastique lors de l'extraction n'est pas considérée comme un "enclenchement", c'est-à-dire que les éléments filetés peuvent être déformés seulement un peu plastiquement lors du mouvement d'extraction translatoire.

**3.** Procédé selon l'une des revendications précédentes, dans lequel l'extraction s'effectue avec une déformation élastique des éléments filetés dans la direction de l'axe (z, 100).

**4.** Procédé selon l'une des revendications précédentes, dans lequel des traverses, des segments ou des points dans la direction de l'axe (z, 100) sont extraits comme éléments filetés.

**5.** Procédé selon l'une des revendications précédentes, dans lequel les éléments filetés sont extraits seulement dans la direction de l'axe (z, 100), notamment sans mouvement radial ou sans mouvement radial essentiel de mâchoires ou de vis, d'outils de formage (12, 21) portant le premier ou le deuxième contour d'outil (12a, 21a).

6. Procédé selon l'une des revendications précédentes, dans lequel les éléments filetés ont des arêtes arrondies (R).

7. Outil de formage pour la mise en oeuvre du procédé selon l'une des revendications précédentes, dans lequel

   (a) un contour négatif (12a, 21a) d'une structure filetée, notamment de traverses, de segments, de nopes ou de points, d'un filetage intérieur ou extérieur (1a, 2a) d'un manchon (1, 2) est prévu dans un outil de formage (12, 21) ;
   (b) une partie en saillie (X1) du contour négatif de la structure filetée pour la formation d'un creux (50, 60, I1) dans la structure filetée de manchon (1a, 2a) ne dépasse pas radialement ou dépasse seulement un peu radialement par rapport

   - au premier creux d'outil de formage (X4) voisin suivant, au moins à la distance (σ) du pas de filetage à l'opposé de la direction d'extraction (z, 100) du manchon,
   - ou au deuxième creux d'outil de formage (X4) voisin suivant dans la direction de l'axe (z, 100),

   du contour négatif de la structure filetée en vue de la formation de la deuxième bosse suivante ou de celle suivant cette dernière (51b, 61b, I4) de la structure filetée de manchon (1a, 2a).

8. Outil de formage selon la revendication 7, dans lequel une ligne de jonction (L1, L2) de toutes les parties en saillie d'outil de formage donne une première ligne droite inclinée ($\alpha_2$) par rapport à l'axe (100) et à la direction d'extraction (z) de l'outil de formage (12, 21) ou de la partie de manchon (1, 2).

9. Outil de formage selon la revendication 8 ou 7, dans lequel une ligne de jonction (L1, L2) de tous les creux d'outil de formage donne une deuxième ligne droite inclinée ($\alpha_2$) par rapport à l'axe (100) ou à la direction d'extraction (z) de l'outil de formage (12, 21) ou de la partie de manchon (1, 2), notamment selon le même angle ($\alpha_2$) que la première ligne mentionnée précédemment.

10. Outil de formage selon l'une des revendications 7 à 9, dans lequel le deuxième creux d'outil de formage (X4) situé avant une bosse d'outil de formage (X1) a radialement - considéré dans la direction d'extraction (z) - à peu près la même dimension que la bosse d'outil de formage mentionnée (X1) de telle sorte que

   (a) l'outil de formage (21) dans la zone de formage de filetage (21a) est conçu légèrement conique dans la direction (z) du mouvement d'extraction (F1) du manchon extérieur en vue de la formation d'un filetage intérieur conique (2a) ; ou
   (b) le tronçon de formage de filetage (1a) de l'outil de formage (12) est élargi légèrement conique dans la direction (z) du mouvement d'extraction (E2) de la section de manchon (1) avec un filetage extérieur en vue de la formation d'un filetage extérieur conique (12a).

11. Section de manchon de crayon avec tronçon d'assemblage fileté rapide conique (1a, 2a) pour un stylo à bille, pour un stylo mine ou pour un stylo encre, obtenue selon l'une des revendications de procédé précédentes ou obtenue avec un dispositif selon l'une des revendications de dispositif précédentes,
   selon laquelle section de manchon (2, 4, HI, HA) plusieurs, notamment plus de deux, éléments filetés du type baïonnette, notamment des traverses, des segments ou des points, sont agencés sur une surface de base conique (L1, L2) de manière à être espacés sur la circonférence et les uns derrière les autres en direction axiale (z, 100) mais à des niveaux radiaux continûment décalés.

12. Section de manchon de crayon avec tronçon d'assemblage fileté rapide conique (1a, 2a) avec fond de filet conique, obtenue selon l'une des revendications de procédé précédentes ou fabriquée avec un dispositif selon l'une des revendications de dispositif précédentes,
   selon laquelle section de manchon (2, 4, HI, HA) une traverse filetée hélicoïdale - non interrompue - (1a, 2a) a une dimension radiale telle que - vue en coupe - une première hauteur de traverse filetée (I4, A1) a globalement la même dimension radiale que le deuxième fond de filet suivant (I1, A4) dans la direction d'extraction (+z, -z).

Fig. 1a

Fig. 1d

Fig. 1b

Fig. 1c

EP 0 833 732 B1

Fig.2b,2c

Fig.2d

3

3a

Fig. 2a

1

1a,1a',1a'',1a*

Fig.2b,2c

Fig. 2b

51b
50b
51a
50a
50
51
$\alpha_1$
$\alpha_2$
$t$
$z$
6
1a

Fig. 2c

R
R
6
R
$\alpha_1$
$\alpha_2$
$t$
$z$
1a

Fig. 3a

Fig. 3b,3c

Fig. 3b

Fig. 3c

Fig. 3d

EP 0 833 732 B1

Fig.4a

Fig.4b

Fig.4c

Fig.4d

14

Fig.5a

Fig.5b

Fig.5c

Fig.6a

Fig.6b

Fig.6c

Fig.7a

Fig.7b

Fig.7c

3a

3

4

4a

6

100

3 + 4

EP 0 833 732 B1

Figur 8